# EUROPEAN PATENT APPLICATION

(11) **EP 1 235 451 A1**
(43) Date of publication of application: **28.08.2002**
(21) Application number: 01400445.1
(22) Date of filing: 20.02.2001
(51) Int. Cl.: H04Q 7/38, H04Q 7/32

(54) **Optimisation of cellular communications network performance**

(71) Applicant: MOTOROLA, INC., Schaumburg, IL 60196 (US)
(72) Inventor: Goeusse, Francois, 91620 Nozay (FR); Elicegui, Lucas Pierre, 92140 Clamart (FR)
(74) Representative: Litchfield, Laura Marie

(57) **Abstract**

The user of a mobile subscriber unit (3-7) is guided to a region (10) of good signal reception by means of a graphical display (13). Regions of good signal quality are identified by a serving base station (1) from measurement reports and location information received from units (3-7) in the cell.

## Description

This invention relates to cellular communications systems and particularly to the optimization of its performance as perceived by a subscriber.

In a cellular communications system, a plurality of base stations provides a radio telecommunications service to a plurality of remote subscriber units often to as mobile stations. Each base station defines a particular geographical area or cell proximate to the base station to produce coverage areas. The communications link from the base station to the mobile station is referred to as the downlink. Conversely, the communications link from a mobile station to the base station is referred to as the uplink. Usually, several base stations are under the control of a base station controller. The base station controller communicates directly with a mobile switching centre which, in turn, is coupled to a public switched telephone network.

Multiple access techniques permit the simultaneous transmissions from several mobile stations to a single base station. The GSM system (Global System for Mobile Communications) uses time division multiple access (TDMA), in which a communications channel consists of a time slot in a periodic train of time intervals over the same RF carrier frequency. Each mobile station is allocated one specific time slot for communication with a base station in a repeating time frame. Another type of multiple access technique, and one proposed for the third generation universal mobile telecommunications system (UMTS) is known as code division multiple access (CDMA) which employs spread-spectrum signaling. Individual users in the CDMA communications network use the same RF carrier frequency, but are separated by the use of individual spreading codes. Hence, multiple communications channels are allocated using a plurality of spreading codes within the portion of radio spectrum, each code being uniquely assigned to a mobile station.

In addition to the provision of communications services, there are also developments currently underway to enable a cellular communications system to determine the location of individual mobile stations. Some proposals utilize methods involving a calculation of the distances between three or more base stations (at known locations) and a mobile station. One known method of estimating a distance between a base station and a mobile station in a GSM network involves measuring the propagation delay incurred by the carrier signal during its return trip from the base station to a mobile station. (See for example WO-A-9205672). Once the distance between three or more known fixed points and the mobile station are known, the mobile station's relative position can be calculated. Other methods rely on the mobile station being provided with an independent means for determining its location (for example, an on-board GPS (Global Positioning System) receiver). In such cases, the mobile station reports its location back to its serving base station.

In a typical cellular communications system, each mobile station performs real time measurements and reports them back to its serving base station. For example, in the GSM system each mobile station measures the downlink signal quality i.e. the bit error rate, and the downlink signal strength of a signal received from its serving base station in whose cell it currently resides, and also the downlink signal strength from neighbouring base stations serving neighbouring cells. All these measurements are periodically reported back to the serving base station.

Signal quality can vary from one location to another in any given cell owing to one or more interference effects. Co-channel interference and adjacent channel interference between RF carriers are two such and well-known effects. So too, are "slow fading", which can occur when a mobile station is shadowed by a large building, and "fast fading" which results when several signals arrive at a mobile station via a number of paths, i.e. the multi-path effect.

Hence throughout the cell, the quality of a signal received by a mobile station from its serving base station, at any given time, is quite likely to vary from one part of the cell to another. This variation can be attributed to several factors, for example to the geography of the cell (e.g. the relative location of buildings with respect to the base station), and the number of active users in the cell.

An operator of the cellular communications system may have an idea of where comparatively good and bad regions of signal reception in a cell are located, from test results which he may make from time to time. However the user of the mobile station does not.

Thus the quality of service provided to the mobile station by the cellular communications system will be variable with the mobile station's location within a cell. A poor quality signal often results in poor speech quality at the mobile station in the case of voice transmissions, or even a dropped call or an inability to set up a call. In the case of data transmissions, a poor signal quality means that a high data rate is unlikely to be available to the mobile station.

In the particular case of CDMA transmissions, variation in the signal quality can also be attributed to the distance of the mobile station from the base station. Furthermore, in CDMA systems, users at a cell's perimeter create far more interference within the cell than the same number of users located at the cell's centre, close to the base station. This has the effect of reducing the total capacity of a cell which is a disadvantage to the system operator as well as to a subscriber.

When a mobile station user is engaged in a voice call and he notices a deterioration in quality of speech received, he might move around in some arbitary direction in the hope that the quality might improve.

When a mobile station user is about to set up a call, he might note the signal strength indicator displayed on the mobile station, usually in the form of up to five bars of increasing height, and if only one or two bars are visible, then he might move around in search of a location where more bars are displayed.

However these searches for better signal quality are entirely haphazard, the user having no notion of where a zone of optimum reception is likely to be.

Therefore, any assistance that the user could be given in order to direct him to a zone of good signal quality, would be advantageous.

In a first aspect, the present invention comprises apparatus for optimizing the performance of a cellular communications system including at least one base station serving an associated cell and at least one mobile station positioned at a first location in a cell, wherein the quality of signals transmitted from a base station and received by a mobile station varies across the cell, the apparatus including;
means for determining the location of the mobile station,
means for identifying locations of varying signal quality within a cell,
and means for indicating to the mobile station a second location having a more favourable signal quality compared with the first location.

Determination of the mobile station's location (either in absolute terms or as a range and bearing from its serving base station) may be done by any appropriate conventional means. Such means may be located at a base station or a base station controller. For example, the means for determining the location of the mobile station may be adapted to calculate the mobile station's location based on time of arrival measurements or time difference of arrival measurements of signals sent from the mobile station to at least three base stations.

In one embodiment, a base station is equipped with means for receiving an information signal from the mobile station relating to the mobile station's location as given by a GPS receiver on-board the mobile station.

The means for identifying locations of varying signal quality across a cell may be located at a base station or a base station controller and may be adapted to utilize results of system tests made by the operator of the cellular communication system.

Alternatively, a picture of signal quality for various locations within a cell may be derived from downlink signal quality measurement reports received at a base station from individual mobile stations located within its cell.

The means for indicating to the mobile station a location of better signal quality, may take one of several forms. For example, the serving base station may be adapted to send a voice message or a text message to the mobile station so that the mobile station could communicate a grid reference to the user. Alternatively, the text message could be configured to display an instruction to the user such as "move one hundred metres in a northerly direction". Alternatively, the base station may be adapted to send a signal to the mobile station so that the mobile station can display a map of the mobile station's local area with markings indicating the mobile station's current position and a route to a location of better signal quality.

Optionally, the base station may be further configured to indicate to the mobile station the available data rate of transmissions received at a designated location. Available data rate can be deduced by the base station or base station controller knowing the available signal quality at that location.

In a second aspect, the present invention comprises a subscriber unit including means for receiving a signal identifying a geographical location having favourable communications signal reception quality,
and means for communicating the geographical location to a user of the subscriber unit.

The subscriber unit may also include means for measuring signal quality of signals received from a remote transmitter and means for reporting the measurements to a remote receiver.

In one example, the remote transmitter and receiver are co-located at a base station which forms part of a cellular communication system and the subscriber unit is located in the cell served by the base station.

The subscriber units may also include means for determining its location, for example, a GPS receiver, and may include means for informing a serving base station of its current location.

The means for communicating geographical location to the user may comprise a graphical display, text message or audio message for example. In addition, the subscriber unit may be configured to display the available bit rate of a transmission from a base station.

In one embodiment, each base station in a cellular communication system is provided with information relating to variations of signal quality in neighbouring base stations, thus enabling a base station to guide a mobile station currently within its cell to a location in another cell where the signal quality is better.

Hence the invention provides a means for informing the user of a mobile station whether and how he can achieve better signal quality. This is advantageous to the user not only when attempting to set up a call, but also during a call.

Radio propagation conditions are continually changing with time and the invention provides for continual monitoring of signal quality across cells. Should the quality of signal deteriorate during a voice call or during reception of data, then the user of the mobile station can be directed to a location having better quality, thus reducing risk of a dropped call and giving better user satisfaction.

The invention also provides advantages for the operator of the cellular communication system because by ensuring that mobile stations are located in favourable regions, interference is likely to be diminished with a corresponding increase in cell capacity. Use of the invention is particularly advantageous in urban areas.

Some embodiments of the invention will now be described, by way of example only, with reference to the drawings of which;
Figure 1 is a schematic block diagram of a cellular communication system incorporating apparatus in accordance with the invention, and
Figure 2 is a representation of a visual display of a mobile 'phone in accordance with one embodiment of the invention.

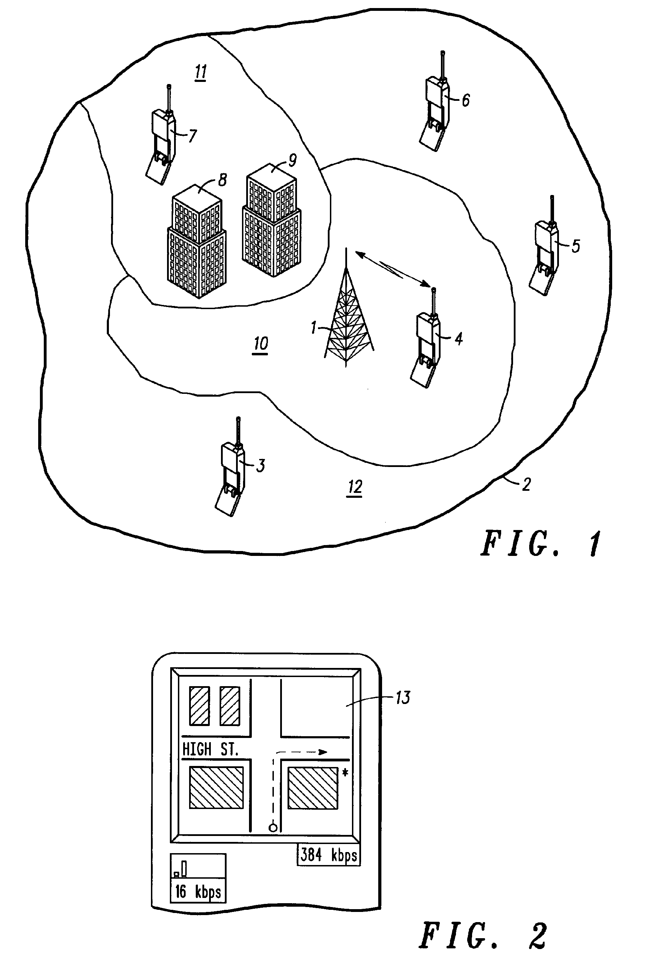

In Figure 1, a base station 1 serves an associated cell 2 in which are located a plurality of mobile 'phones 3-7. The cell 2 occupies part of an urban area populated with buildings, two of which 8, 9 are shown in Figure 1. The cell 2 of Figure 1 is shown divided into three zones 10, 11, 12.

All the mobile 'phones 3-7 are capable of communications with the base station 1 which in turn provides a communication service operating in a CDMA mode.

The base station 1 is further adapted to determine the locations of each mobile 'phone 3 to 7 relative to itself and to identify zones 10, 11, 12 of varying signal quality within its cell 2. It is further adapted to transmit to each mobile 'phone 3-7 an identification of locations having favourable signal quality.

Each mobile 'phone 3-7 incorporates a GPS receiver (not shown) and is adapted to inform the base station 1 of its current position. Each mobile 'phone 3-7 is also adapted to receive information from the base station 1 relating to locations in the cell where received signal quality is good and to display such information on a visual display 13 (see Figure 2) as an aid to the user of the mobile 'phone.

In operation, the mobile 'phones 3-7 periodically monitor communication signals from the base station 1 and measure signal quality of the received signals (in accordance with known techniques). Each mobile 'phone 3-7 reports its signal quality measurements back to the base station 1 on a periodic basis. Each mobile 'phone 3-7 also sends to the base station 1 an indication of its current position (which is determined by the on-board GPS receiver).

From knowledge of the signal quality measurements received from each mobile 'phone 3-7 in its cell 2, and by deducing each of their positions in its cell 2, the base station 1 identifies geographical areas (or zones) in which mobile 'phone reported signal quality levels lie in pre-defined bands. In Figure 1, three zones 10, 11, 12 have been identified.

Zone 10 is an area where a comparatively high quality of signal can be received, mainly by virtue of its proximity to the base station 1. A peripheral region 12 of the cell has been identified as a zone where a comparatively low quality of signal is received, mainly by virtue of its remoteness from the base station 1. A zone 11 is identified as having a quality of received signal which is poorer still, due to the shadowing effect of the buildings 8 and 9.

In this example, the user of the mobile 'phone 6 (which is currently located in the zone 12 having rather poor signal quality reception) wishes to receive some data via the base station 1. The mobile 'phone 6 has already reported its position and received signal quality to the base station 1, as have the other mobile 'phones in the cell 2. The display 13 of Figure 2 shows a received signal quality level of only two bars and an available bit rate for downloading the desired data of only 16 kbps. This data rate is insufficient for this particular user who requires 384 kbps.

Without the benefit of the present invention, the user of the mobile 'phone 6 would observe that the signal quality was comparatively low and might move around his immediate locality in an attempt to improve it. Ideally, he should move into zone 10 avoiding zone 11. However, the direction of movement chosen would be entirely arbitrary with no guarantee of finding a locality with a stronger signal.

With the present invention, the base station 1 has already identified zone 10 as being the area of best received signal quality at the present time and, knowing the relative position of the mobile 'phone 6 in the cell 2, can guide the user to a point within the more favourable zone.

In this example, the base station 1 transmits information for display in graphical form on the mobile 'phone's display 13.

In Figure 2, a circle represents the mobile 'phone's current position. A dotted line shows a route towards a location (designated with an asterisk) in zone 10 where there is a better received signal quality equivalent to a data rate of 384 kbps.

Hence the user of the mobile 'phone 6 is guided to an optimum location rather than having to move around randomly in order to find some improvement. Once having reached the favourable location, he can download the desired data.

## Claims

1. Apparatus for optimizing the performance of a cellular communication system including at least one base station (1) serving an associated cell (2) and at least one mobile station (7) positioned at a first location (11) in a cell (2), wherein the quality of signals transmitted from a base station (1) and received by a mobile station (7) varies across the cell (2), the apparatus including;
means for determining (1) the location of the mobile station (7),
means for identifying (1) locations (10, 11, 12) of varying signal quality within a cell (2),
and means for indicating (1) to the mobile station (7) a second location (10) having a more favourable signal quality compared with the first location (11).

2. Apparatus as claimed in Claim 1 in which the means for identifying (1) are adapted to identify locations of varying signal quality from measurement reports received from mobile stations (3-7) located within the cell (2).

3. Apparatus as claimed in Claim 1 or Claim 2 and further including means for receiving (1) information relating to variation in signal quality in adjacent cell.

4. Apparatus as claimed in any preceding Claim in which the means for indicating (1) are adapted to transmit a message relating to a geographical location to the mobile station (7).

5. Apparatus as claimed in Claim 4 in which the message has the form of a text message.

6. Apparatus as claimed in any preceding Claim and further including second means for indicating (1), for indicating to the mobile station (7) an available data rate of a transmission received at the second location (10).

7. A subscriber unit (7) including means for receiving a signal identifying a geographical location (10) having favourable communications signal reception quality,
and means (13) for communicating the geographical location to a user of the subscriber unit (7).

8. A subscriber unit (7) as claimed in Claim 7 further including means (7) for determining its location and for informing a remote receiver of said location.

9. A subscriber unit (7) as claimed in either of Claims 7 or 8 in which the means for displaying (13) the geographical location comprises a graphical display.

10. A subscriber unit (7) as claimed in any of Claims 7 to 9 and further including second means for displaying (13), for displaying an available data rate of a transmission received at the geographical location.
